# EUROPEAN PATENT APPLICATION

(11) **EP 3 686 657 A1**
(43) Date of publication of application: **29.07.2020**
(21) Application number: 20164279.0
(22) Date of filing: 23.12.2015
(51) Int. Cl.: G02F 1/025, G02F 1/225, G02B 6/122, G02B 6/14

(54) **STRESS-TUNED PLANAR LIGHTWAVE CIRCUIT AND METHOD THEREFOR**

(30) Priority: 23.12.2014 US 201414580831
(62) Divisional of application: 15813891.7
(71) Applicant: Lionix International BV, 7500 AL Enschede (NL)
(72) Inventor: HEIDEMAN, Rene Gerrit, 7572 TK Oldenzaal (NL); LEINSE, Arne, 7623 PM Borne (NL)
(74) Representative: Williams, David John

(57) **Abstract**

There is disclosed a planar-lightwave circuit (PLC) comprising: a first waveguide having: a core that supports the propagation of an optical mode of a first light signal, the optical mode including a first TE-polarization mode and a first TM-polarization mode, the core including a plurality of layers that collectively support the propagation of the optical mode, the plurality of layers comprising a first silicon nitride layer, a second silicon nitride layer, and a silicon dioxide layer that is between the first silicon nitride layer and second silicon nitride layer; and a top cladding disposed on the core; a first layer comprising a piezoelectric material, the first layer being disposed on the first waveguide in at least a portion of a first region; wherein the first layer is dimensioned and arranged to induce a first stress-induced phase shift in the first TE-polarization mode and a second stress-induced phase shift in the first TM-polarization mode in response to a first electric signal applied to the first layer.

## Description

### Cross Reference to Related Applications

This case is a continuation-in-part of co-pending U.S. Patent Application Serial Number 14/051715, filed October 11, 2013 (Attorney Docket: 142-024US1), which claims priority of U.S. Provisional Patent Application Serial Number 61/712,587, filed October 11, 2012 (Attorney Docket: 142-024PR1), each of which is incorporated by reference.

In addition, the underlying concepts, but not necessarily the language, of the following cases are incorporated by reference:
(1) U.S. Patent 7,146,087, issued Dec. 5, 2006;
(2) U.S. Patent Application Serial Number 14/321,138; and
(3) U.S. Patent 7,142,759, issued Nov. 28, 2006.

If there are any contradictions or inconsistencies in language between this application and one or more of the cases that have been incorporated by reference that might affect the interpretation of the claims in this case, the claims in this case should be interpreted to be consistent with the language in this case.

### Field of the Invention

The present invention relates to integrated optics in general, and, more particularly, to surface waveguide structure and technology.

### Background of the Invention

Planar Lightwave Circuits (PLCs) are optical systems comprising one or more waveguides that are integrated on the surface of a substrate, where the waveguides are typically combined to provide complex optical functionality. These "surface waveguides" typically include a core of a first material that is surrounded by a second material having a refractive index that is lower than that of the first material. The change in refractive index at the interface between the materials enables reflection of light propagating through the core, thereby guiding the light along the length of the waveguide.

PLC-based devices and systems have made significant impact in many applications, such as optical communications systems, sensor platforms, solid-state projection systems, and the like. Surface-waveguide technology satisfies a need in these systems for small-sized, reliable optical circuit components that can provide functional control over a plurality of optical signals propagating through a system. Examples include simple devices (*e.g.,* 1x2 and 2x2 optical switches, Mach-Zehnder interferometer-based sensors, *etc.*), as well as more complex, matrix-based systems having multiple waveguide elements and many input and output ports (*e.g.,* wavelength add-drop multiplexers, cross-connects, wavelength combiners, *etc*.).

Common to most of these systems is a need for a PLC-based switching element. Historically, the most common switching elements are based on a device known as a thermo-optic (TO) phase shifter. A TO phase shifter takes advantage of the fact that the refractive index (*i.e*., the speed of light in a material) of glass is temperature-dependent (referred to as the thermo-optic effect) by including a thin-film heater that is disposed on the top of the upper cladding of a surface waveguide. Electric current passed through the heater generates heat that propagates into the cladding and core materials, changing their temperature and, thus, their refractive indices. TO phase shifters have demonstrated induced phase changes as large as 2π.

The TO phase shifter is typically included in another waveguide element, such as a Mach-Zehnder interferometer (MZI), to form an optical switching element. In an MZI switch arrangement, an input optical signal is split into two equal parts that propagate down a pair of substantially identical paths (*i.e*., arms) to a junction where they are then recombined into an output signal. One of the arms incorporates a TO phase shifter that controls the phase of the light in that arm. By imparting a phase difference of π between the light-signal parts in the arms, the two signals destructively interfere when recombined, thereby canceling each other out to result in a zero-power output signal. When the phase difference between the light-signal parts is 0 (or n*2π, where n is an integer), the two signals recombine constructively resulting in a full-power output signal.

Unfortunately, prior-art PLC-based switching elements have disadvantages that have, thus far, limited their adoption in many applications. First, TO phase shifters consume a great deal of power - on the order of 300-500 mW per heater element. Further, in addition to heating the core and cladding materials directly below the heater element, heat from the thin-film heater also diffuses laterally in the glass, which can lead to thermal crosstalk between adjacent waveguides. Still further, glass has a low thermal conductivity coefficient, which results in heating and cooling times that are long - typically, on the order of milliseconds. As a result, TO phase shifters are poorly suited for many applications.

To overcome some of the limitations of TO phase shifters, piezoelectric-actuated, stress-inducing (SI) phase shifters were developed. SI phase shifters integrated with conventional silica-on-silicon waveguides are disclosed, for example, by S. Donati, et al., in "Piezoelectric Actuation of Silica-on-Silicon Waveguide Devices," published in IEEE Photonics Technologies Letters, Vol. 10, pp. 1428-1430 (1998). Such prior-art phase shifters have been shown to be able to enable optical switching on the order of a microsecond with low power dissipation.

It should be noted that a silica-on-silicon waveguide is a "low-contrast waveguide" that is characterized by only a slight difference (<1%) in the refractive indices of their core and cladding materials. Low-contrast waveguides were developed for use in telecommunications systems, where low propagation loss is critical. Low-contrast waveguides can have propagation losses less than 0.1 dB/cm. Further, the mode-field size of a low-contrast waveguide is typically well matched to that of an optical fiber, which facilitates low-loss optical coupling between them.

Unfortunately, because of this low refractive-index contrast, light is only loosely confined in the core of a low-contrast waveguide and a significant portion of its optical energy extends well out into the cladding as an evanescent tail. As a result, the mode-field profile of a light signal (*i.e*., the distribution of optical energy about the central axis of the waveguide) propagating in a low-contrast waveguide is quite large. In addition, low-contrast waveguides require cladding layers that are quite thick (typically, 12-25-microns thick). The need for such thick cladding layers can reduce the effectiveness of an integrated phase shifter.

In addition, the loosely confined optical energy of a light signal can leak out of the waveguide as it propagates down the waveguide - particularly at tight bends and loops. Still further, to avoid overlap of the loosely confined mode-field profiles of adjacent waveguides, low-contrast waveguides must be spaced well apart to avoid optical coupling between them.

PLCs based on low-contrast waveguides, therefore, require a great deal of chip real estate to realize any significant functionality, which results in high per chip cost. In addition, the large-bending radii requirement of low-contrast waveguides precludes realization of some waveguide components, such as large free-spectral-range ring resonators, which require small bend radii.

It would be desirable to combine SI phase shifter technology with a PLC technology requiring less chip real estate to enable low-cost, low-power, fast optical-signal control while maintaining low-loss optical coupling with external optical devices.

### Summary of the Invention

The present invention enables a PLC that can be optically coupled with an external device with low optical loss, while also providing low-power functional control over an optical signal propagating through the PLC, where the PLC can include high-density surface waveguides within a small chip area. As a result, embodiments of the present invention can provide high functionality operation at low cost and with low optical loss. Embodiments of the present invention are particularly well suited for use in applications such as telecommunications, data communications, projection systems, and sensors.

The present invention employs a high-contrast waveguide structure having a multi-layer core that gives rise to a tightly confined mode-field profile for light propagating through the waveguide. As a result, the cladding layers of this waveguide structure can be thinner than dielectric-based surface waveguides of the prior art. This enables more effective transfer of strain from the piezoelectric layer of an SI phase shifter disposed on the upper cladding into the waveguide, where the strain manifests as a stress-induced change in refractive index of the waveguide materials. The present invention, therefore, enables more effective phase control of a light signal, as well as PLC chips that can be significantly smaller and less expensive than optical functional PLCs of the prior art.

An illustrative embodiment of the present invention is a PLC that includes a high-contrast-waveguide region in which a Mach-Zehnder interferometer-based optical switch is formed. The output of the MZI switch is optically coupled with a low-contrast waveguide in a low-contrast-waveguide region via a spotsize converter. The low-contrast waveguide terminates at an output port having a mode-field profile that is matched to that of an external optical fiber, thereby enabling low-loss optical coupling between them.

The high-contrast waveguide includes a waveguide structure having a multi-layer core that includes first and second silicon nitride layers separated by a very thin layer of silicon dioxide. The first silicon nitride layer has a first thickness suitable for operation as a low-contrast waveguide without the presence of the second silicon nitride layer. The second silicon nitride layer has a second thickness selected such that the two silicon nitride layers collectively define a high-contrast-waveguide core that supports propagation of a light signal having a tightly confined optical mode. The silicon dioxide layer of the multi-layer core is sufficiently thin that the two silicon nitride layers are optically coupled such that they collectively support propagation of the light signal as if the silicon dioxide layer were not present. In other words, the presence of the silicon dioxide layer does not appreciably perturb the shape of the optical mode from that which would be supported by a single layer of silicon nitride having the combined thickness of the two silicon nitride layers.

The low-contrast waveguide has a core that includes the first silicon nitride layer but not the second silicon nitride layer. As a result, the low-contrast waveguide operates as a conventional silicon nitride stripe waveguide that supports a relatively larger optical mode whose mode-field profile is substantially matched to that of a conventional optical fiber. In some embodiments, the mode-field profile of the low-contrast waveguide is matched to a different external device, such as a laser, detector, *etc.* In some embodiments, the low-contrast waveguide terminates at an output port that includes a mode-field expander that controls the mode-field profile of the light signal to facilitate optical coupling with an external device.

The spotsize converter includes a transition region that optically couples the high-contrast waveguide and the low-contrast waveguide. The transition region has a multi-layer core that includes the first and second silicon nitride layers and the intervening silicon dioxide layer. One end of the transition region abuts the high-contrast region at a first point, while the other end of the transition region abuts the low-contrast waveguide at a second point. The thickness of the second nitride layer changes from the second thickness at the first point to extinction at the second point. As a result, the transition region adiabatically transitions the mode-field profile between the relatively smaller mode field in the high-contrast region and the relatively larger mode field in the low-contrast region.

Functional control over the optical signal in the high-contrast-waveguide region is provided via an SI phase shifter formed in one arm of the MZI switch. The SI phase shifter includes bottom and top electrical contact layers and a piezoelectric layer between them. The bottom contact is in physical contact with the thin upper cladding of the high-contrast waveguide such that an electrical signal applied between the two electrical contact layers induces a strain in the piezoelectric layer that is efficiently transferred as stress in the multi-layer core and/or upper cladding layer of the high-contrast waveguide. Further, in the illustrative embodiment, the upper cladding layer in the region of the SI phase shifter is thinned to further enhance the transfer of mechanical energy between the piezoelectric layer and the waveguide materials.

Like SI phase shifters of the prior art, the present invention induces a phase shift on a light signal propagating through a waveguide by imparting a stress on the materials of the waveguide. In contrast to prior-art SI phase shifters, however, in embodiments of the present invention, the SI phase shifter of the present invention is operatively coupled with a high-contrast waveguide. This affords embodiments of the present invention several advantages over the prior art, including:
i. improved mechanical coupling of stress induced by the SI phase shifter with the waveguide due to thinner core and cladding layers; or
ii. reduced real-estate requirements for the PLC by virtue of the tighter optical mode confinement, tighter bending radii, and improved waveguide density capability of high-contrast waveguides; or
iii. lower overall system cost; or
iv. any combination of i, ii, and iii.

By virtue of the inclusion of the spotsize converter, these advantages are accrued while maintaining good optical coupling to external devices, such as optical fibers, laser, and/or detectors.

In some embodiments, the upper cladding layer in the high-contrast region is not thinned under the SI phase modulator.

An embodiment of the present invention is a planar lightwave circuit (PLC), the PLC including: (1) a high-contrast-waveguide region comprising a first waveguide portion that includes a multi-layer core that collectively supports propagation of a light signal having a first mode-field profile, the multi-layer core having; (a) a first layer comprising a first material, the first layer having a first thickness; (b) a second layer comprising the first material, the second layer having a second thickness that is greater than the first thickness; and (c) a third layer that Is between the first layer and the second layer, the third layer comprising a second material, wherein the third layer has a third thickness that is less than or equal to 500 nm; (2) a low-contrast waveguide region comprising a second waveguide portion that includes a single-layer core that collectively supports propagation of a light signal having a second mode-field profile that is larger than the first mode-field profile, the single-layer core comprising the first layer; (3) a spotsize converter that optically couples the first waveguide portion and the second waveguide portion; and (4) a phase shifter disposed in the high-contrast-waveguide region, the phase shifter including the first waveguide portion, a first electrode layer, a second electrode layer, and a piezoelectric layer that is between the first electrode layer and the second electrode layer, wherein the phase shifter is operative for inducing stress in the first waveguide portion in response to a control signal.

### Brief Description of the Drawings

FIG. 1 depicts a functional block diagram of a PLC-based optical modulator in accordance with an illustrative embodiment of the present invention.
FIG. 2 depicts operations of a method suitable for forming a PLC in accordance with the illustrative embodiment.
FIG. 3 depicts a schematic drawing of the surface waveguide network of modulator **100.**
FIG. 4 depicts a schematic drawing of a cross-sectional view of an HC waveguide in accordance with the illustrative embodiment.
FIG. 5 depicts a schematic drawing of a cross-sectional view of an LC waveguide in accordance with the illustrative embodiment.
FIGS. 6A-B depict schematic drawings of cross-sectional and top views, respectively, of a portion of a spotsize converter as disclosed in the parent application.
FIG. 7A depicts a schematic drawing of a top view of switching element **102.** SI phase shifter **122** is operatively coupled with arm **310B** of MZI **306.**
FIG. 7B depicts a schematic drawing of a cross-sectional view of SI phase shifter **122** and arm **310B.**
FIG. 8 depicts sub-operations of a method suitable for forming an SI phase shifter in accordance with the illustrative embodiment.
FIG. 9 depicts simulation results showing the voltage required to induce a 2π phase change in HC waveguide **302** versus upper-electrode width, **w2**, for different thicknesses, **t5,** of upper-cladding layer under phase shifter **122.**
FIG. 10A depicts a schematic drawing of a cross-sectional view of a switching element in accordance with an alternative embodiment of the present invention.
FIG. 10B depicts a schematic drawing of a cross-sectional view of a switching element in accordance with the alternative embodiment of the present invention, where phase control region is formed via conformal deposition of top-cladding-layer material over a multi-layer core.
FIG. 11 depicts simulation results for the effective refractive index of HC waveguide **302** versus upper-electrode width, **w2**, for different lengths and thicknesses of piezoelectric layer **706** in accordance with the illustrative embodiment.
FIG. 12 depicts a plot of measured modulation depth induced in HC waveguide **302** by phase shifter **122.**
FIG. 13 depicts a plot of measured switching speed in HC waveguide 302 by phase shifter **122.**

### Detailed Description

For the purposes of the present Specification, including the appended claims, the terms **"Disposed on"** or **"Formed on"** are defined as "exists on" an underlying material or layer either in direct physical contact or with one or more intervening layers. For example, if a material is described to be "disposed (or grown) on a substrate," this can mean that either (1) the material is in intimate contact with the substrate; or (2) the material is in contact with one or more layers that already reside on the substrate. It should be noted that a conformal layer is considered disposed on each surface of a structure to which it conforms.

This case is a continuation-in-part of U.S. Patent Application Serial Number 14/051715, entitled "Surface Waveguide Having a Tapered Region and Method of Forming" (hereinafter referred to as "the parent case"), which is incorporated in its entirety by reference. As discussed in the parent case, use of a waveguide-taper-based spotsize converters offers a way to improve optical coupling efficiency between a high-contrast waveguide (*i.e*., a surface waveguide whose core and cladding materials having a large difference in refractive index - typically 25-100%), and a conventional optical fiber by enabling control over the size of the mode-field profile at a waveguide facet so that it can more closely match that of an optical fiber.

Prior-art spotsize converters have several disadvantages, however. First, some only control the shape of an optical mode in one dimension, thereby providing only minimal improvement in optical coupling efficiency. Second, those that do offer control over the complete mode-profile shape are typically very difficult to controllably fabricate, making them difficult to commercialize. The parent case introduced a spotsize converter that overcomes some of the disadvantages of these prior-art spotsize converters.

The present invention combines the spotsize converter of the parent invention with an SI phase shifter formed in a high-contrast-waveguide region of a PLC substrate to realize a PLC having functional control over one or more optical signals and low optical coupling loss to external optical devices, where the chip real estate required for the PLC is significantly smaller than possible in the prior art.

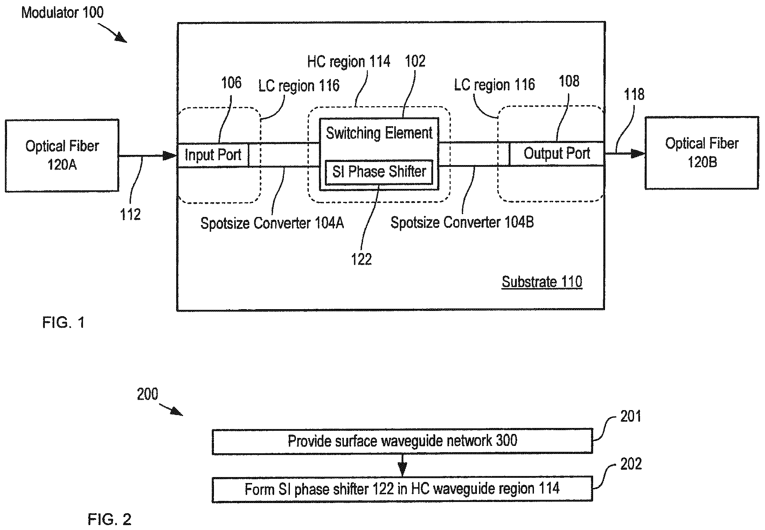

FIG. 1 depicts a functional block diagram of a PLC-based optical modulator in accordance with an illustrative embodiment of the present invention. Modulator **100** includes switching element **102,** spotsize converters **104,** input port **106,** and output port **108,** all of which are monolithically integrated on substrate **110.** Modulator **100** is operative for controlling the transmission of light from optical fiber **120A** that is optically coupled with input port **106** to optical fiber **120B** that is optically coupled with output port **108.** In other words, modulator **100** receives light signal **112** and provides output signal **118.** It should be noted that modulator **100** is merely an exemplary PLC-based optical system for which the present invention is applicable.

Modulator **100** is illustrative of the present invention in that it includes both high-contrast waveguide regions and low-contrast-waveguide regions, where at least one surface waveguide is common to both types of regions. The mode-field profile of a light signal propagating through this waveguide is adiabatically converted between that of each region via a spotsize converter. Further, functional control over the light signal is provided via a SI phase shifter formed within the high-contrast-waveguide region.

Still further, modulator **100** includes switching element **102,** which comprises a network of high-contrast waveguides and a phase control element (*i.e*., SI phase shifter **122**) that is operatively coupled with a portion of the waveguide network.

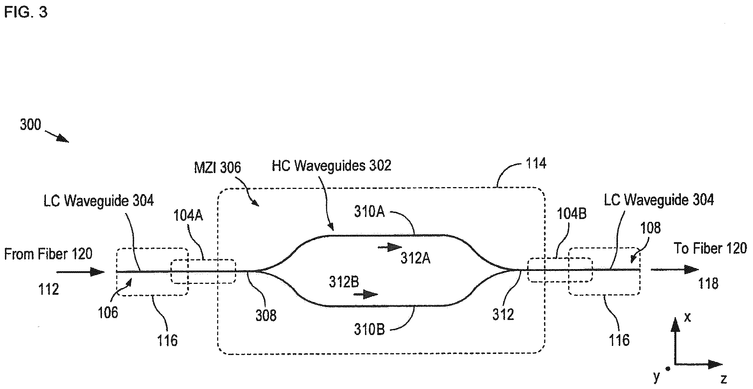

FIG. 2 depicts operations of a method suitable for forming a PLC in accordance with the illustrative embodiment. Method **200** begins with operation **201,** wherein the surface waveguide network of modulator **100** is provided. Method **200** is described with continuing reference to FIG. 1, as well as reference to FIGS. 3-7.

FIG. 3 depicts a schematic drawing of the surface waveguide network of modulator **100.** Network **300** includes high-contrast waveguides **302** (hereinafter referred to as HC waveguides **302**) formed in high-contrast-waveguide region **114,** low-contrast waveguides **304** (hereinafter referred to as LC waveguides **304**) formed in low-contrast-waveguide region **116,** and spotsize converters **104A** and **104B,** each of which includes a portion of an HC waveguide **302** and a portion of an LC waveguide **304** (*i.e*., each spotsize converter includes a portion of the LC and HC waveguide regions), as well as a transition region, the ends of which abut each of the LC and HC waveguide regions. In some embodiments, at least one of HC waveguide region **114** and LC waveguide region **116** includes several non-contiguous sub-regions that are interconnected via spotsize converters in similar fashion to that shown in FIG. 1.

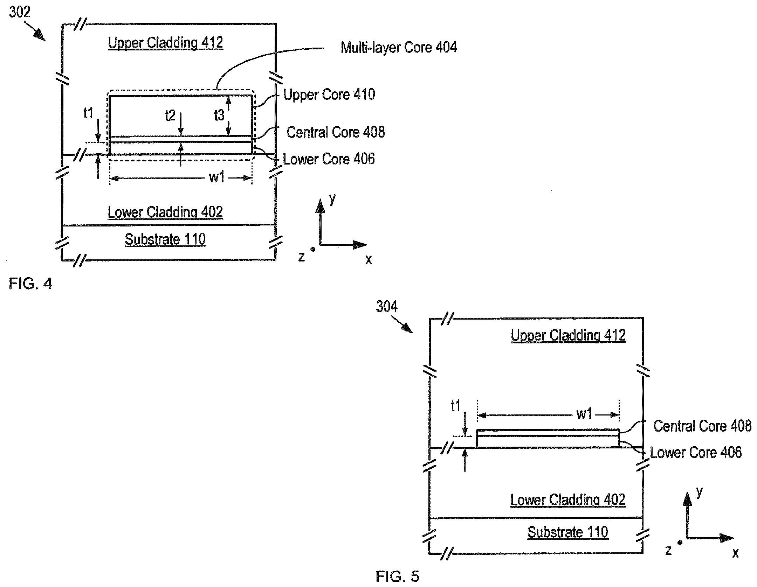

FIG. 4 depicts a schematic drawing of a cross-sectional view of an HC waveguide in accordance with the illustrative embodiment. Waveguide **302** includes lower cladding **402,** multi-layer core **404,** and upper cladding **412,** all of which are disposed on substrate **110** as shown. Multi-layer core **404** comprises lower core **406,** central core **408,** and upper core **410,** which collectively support the propagation of light signal **112** such that the optical mode of the signal is tightly confined. Methods suitable for forming an HC waveguide in accordance with the present invention are described in detail in the parent application.

Lower cladding layer **402** is a layer of silicon dioxide formed via conventional methods, such as thermal oxidation, low-pressure chemical-vapor deposition (LPCVD), plasma-enhanced chemical-vapor deposition (PECVD), spin-on techniques, sputtering, wafer bonding, etc. Lower cladding layer **402** has a thickness of approximately 8 microns. Typically, lower cladding layer **402** has a thickness within the range of approximately 2 microns to approximately 15 microns, although other thicknesses are within the scope of the present invention. In some embodiments, lower cladding layer **402** comprises one or more materials other than silicon dioxide, such as a different silicon oxide, or other dielectric. One skilled in the art will recognize that in order to perform as a cladding layer for waveguide **302,** the refractive index of lower cladding layer **402** must be lower than the effective refractive index of cores **406** and **408,** as described below. It will be clear to one skilled in the art how to specify, make, and use lower cladding layer **402.** Further, in some embodiments, substrate **110** comprises a material, such as fused silica or another glass, which is suitable for use as a lower cladding for waveguide **302.** In some of these embodiments, lower cladding layer **402** is not included and substrate **110,** itself, acts as the lower cladding for waveguide **302.**

The formation of multi-layer core **404** begins with the formation of lower core **406.** Lower core **406** is a layer of LPCVD-deposited stoichiometric silicon nitride having a thickness, **t1**, of approximately 65 nanometers (nm). The thickness of lower core **406** is selected based on the desired mode-field profile for optical signal **112** in low-index region **120** or at the entry and exit facets of modulator **100.** For example, a thickness of 65 nm is preferable for applications wherein the LC waveguide is intended to be mode-matched with a conventional optical fiber for light signals having wavelengths at or near 1550 nm. For visible-light applications, however, lower core **406** preferably is thinner, with a thickness within the range of approximately 25 nm to approximately 50 nm. Typically, lower core **406** has a thickness within the range of approximately 10 nm to approximately 100 nm, although other thicknesses are within the scope of the present invention.

Central core **408** is a layer of LPCVD-deposited, TEOS-based silicon dioxide formed in direct contact with lower core **406.** Central core **408** has a thickness, **t2,** of approximately 100 nm. The thickness of central core **408** is selected to enable optical coupling of lower core **406** and upper core **410** such that these layers collectively support propagation of light signal **112,** while also mitigating perturbation of the optical signal as it propagates through waveguide **302.** Typically, central core **408** has a thickness, **t2,** within the range of approximately 10 nm to approximately 500 nm. It should be noted that, for visible-light applications, the thickness of central core **408** is preferably within the range of approximately 100 nm to approximately 200 nm. One skilled in the art will recognize, after reading this Specification, that the material used in central core **408** will depend upon the choice of materials for lower core **406** and upper core **410,** as well as the wavelength of optical signal **112.**

Upper core **410** is a layer of LPCVD-deposited stoichiometric silicon nitride formed in direct contact with central core **408.** Upper core **410** has a thickness, **t3,** of approximately 300 nm. Typically, upper core **410** the value of **t3** is within the range of approximately 100 nm to approximately 300 nm, although other thicknesses are within the scope of the present invention. For visible-light applications, the thickness of upper core **410** is typically thinner than for waveguides directed toward infrared applications. As a result, in visible-light applications, the thickness of upper core **410** is preferably within the range of approximately 100 nm to approximately 200 nm.

Upper cladding layer **412** is a layer of LPCVD-deposited TEOS-based silicon dioxide formed in direct contact with upper core **410.** Upper cladding layer **412** has a thickness of approximately 8 microns. Typically, upper cladding layer **412** has a thickness within the range of approximately 2 microns to approximately 15 microns. In some embodiments, upper cladding layer **412** comprises a material other than LPCVD-deposited TEOS-based silicon dioxide. Materials suitable for use in upper cladding layer **412** include, without limitation, LPCVD-deposited silicon oxides, PECVD-deposited silicon oxides, spin-on glasses, other dielectrics, and the like.

One skilled in the art will recognize that the thicknesses and materials of core layers **406, 408,** and **410** are a matter of design choice and is based on the wavelengths of light in light signal **112** and its desired mode-field profile. Materials suitable for use in core layers **406, 408,** and **410** include any material that is substantially transparent for the wavelength of operation, such as stoichiometric silicon nitride, non-stoichiometric silicon nitride, silicon-rich silicon nitride, other dielectrics, doped glasses, semiconductors, silicon compounds (*e.g.,* silicon carbide, silicon-germanium, *etc.*), compound semiconductors, and the like.

FIG. 5 depicts a schematic drawing of a cross-sectional view of an LC waveguide in accordance with the illustrative embodiment. Waveguide **304** includes lower cladding **402,** lower core **406,** central core **408,** and upper cladding **412.** In other words, the structure of LC waveguide **304** is that of HC waveguide **302** without the inclusion of upper core **410.** It should be noted that central core **408** and upper cladding collectively define the upper cladding for LC waveguide **304.** In some embodiments, central core **408** is not included in the waveguide structure of LC waveguide **304.**

Lower core **406** is designed to support the propagation of light signal **112** such that the optical mode of the signal is substantially matched to that of optical fiber **120.** As a result, LC waveguide **304** forms input ports **106** and **108,** which enable low-loss optical coupling to optical fibers **120A** and **120B.** Methods suitable for forming an LC waveguide in accordance with the present invention are described in detail in the parent application.

In some embodiments, at least one of ports **106** and **108** include a mode-field converter (*e.g.,* additional spotsize converter) that converts the mode-field profile of its respective light signal from that of LC waveguide **304** to one that matches an external optical element other than a conventional optical fiber, such as a light source (*e.g.,* a laser, LED, VCSEL, *etc.*), a detector, a free-space lens system, and the like.

Returning now to FIG. 3, HC waveguide region **114** includes a plurality of HC waveguides that collectively define MZI **306.** MZI **306** includes input waveguide 308, arms **310A** and **310B,** and output waveguide **312.** Input waveguide **308,** arms **310A** and **310B,** and output waveguide **312** are arranged such that, as light signal **112** propagates through input waveguide **308,** it is split into equal parts **312A** and **312B** that propagate through equal length arms **310A** and **310B,** respectively, to output waveguide **312.**

Input waveguide **308** is optically coupled with input port **106** via spotsize converter **104A.** In similar fashion, output waveguide **312** is optically coupled with output port **108** via spotsize converter **104B.** Each spotsize converter is designed such that it adiabatically converts the mode-field profile of its respective light signal between that of HC waveguide **302** and that of LC waveguide **304.** The structure and fabrication of spotsize converter **104** are analogous to those of spotsize converters described in the parent case.

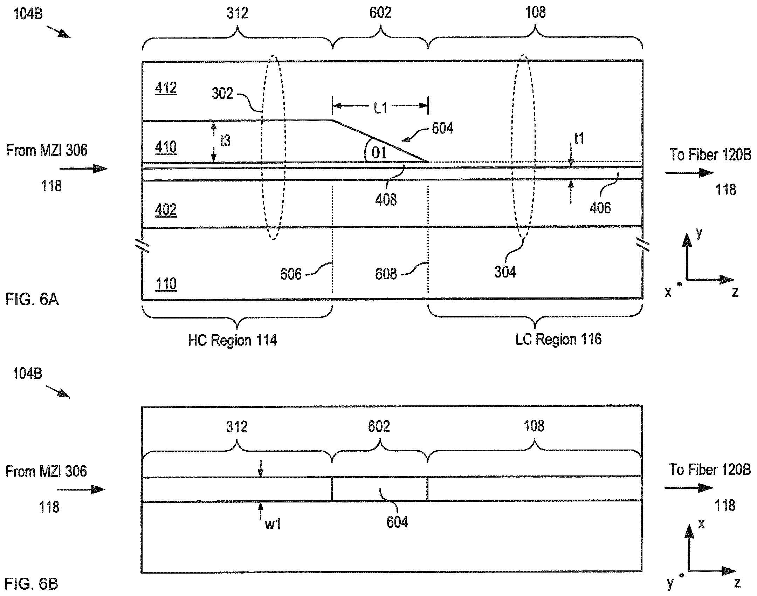

FIGS. 6A-B depict schematic drawings of cross-sectional and top views, respectively, of a portion of a spotsize converter as disclosed in the parent application. Spotsize converter **104B** includes a portion of output waveguide **312,** a portion of output port **108,** and transition region **602.** It should be noted that spotsize converter **104B** is representative of spotsize converter **104A.**

Transition region **602** comprises lower cladding **402,** lower core **406,** central core **408,** vertical taper **604,** and upper cladding layer **412.** Transition region **602** enables a spotsize converter that controls the size and shape of the optical mode of output signal **118** as it passes between a high-contrast waveguide (*i.e*., output waveguide **312**) and a low-contrast waveguide (*i.e*., output port **108**). As discussed above, many spotsize converters of the prior art have only lateral tapers. The performance of such spotsize converters is limited because they control the size of the mode field primarily in only one dimension. Spotsize converter **104B** includes both a lateral and vertical taper in transition region **602,** however. Spotsize converter **104B,** therefore, can enable control over the complete profile of the mode field and can yield spotsize converters with improved performance as compared to such prior-art spotsize converters.

Vertical taper **604** is a substantially linear taper whose thickness changes monotonically along length **L1** from the as-deposited thickness of upper core **410** (*i.e*., **t3**) at point **606,** where transition region **602** abuts high-contrast region **114,** to zero (*i.e*., extinction) at point **608,** where transition region **602** abuts low-contrast region **116.** Vertical taper **604** forms angle **θ1** with the x-z plane, as shown. The magnitude of **θ1** is selected to facilitate adiabatic coupling of output signal **118** between output waveguide **312** and output port **108.** Methods suitable for forming vertical taper **604** are described in U.S. Patent No. 8,718,432, issued May 6, 2014, and entitled "Method for Forming a Spotsize Converter," which is incorporated herein in its entirety. In some embodiments, vertical taper **604** is formed via a different method suitable for forming a shaped vertical profile in a layer, such as shadow-mask etching, reactive ion-etching through a sacrificial, graded-thickness mask (*e.g.,* formed using gray-scale lithography, *etc.*), wet etching, and the like. In some embodiments, vertical taper **604** has a non-linear taper, as described in U.S. Patent Application No. 14/270,014, filed May 5, 2014, and entitled "Layer Having a Non-linear Taper and Method of Fabrication," which is incorporated herein in its entirety.

HC waveguide **302** and LC waveguide **304** are defined such that each has a width, w1, that is equal to approximately 1 micron, which enables single-mode operation for each type of waveguide. For LC waveguide **304,** this width facilitates good optical coupling with a conventional optical fiber. In some embodiments, one or both of HC waveguide **302** and LC waveguide **304** is designed with a different width. In such embodiments, a lateral taper is defined such that the width of lower core **402** and upper core **410** changes linearly along the length of transition region **602** (or, alternatively, within one of HC region **114** and LC region **116**) to adiabatically change the width of the optical-mode profile of light signal **118** as it propagates between HC region **114** and LC region **116.** For example, in some embodiments, LC region **116** is used as a long low-propagation-loss section in a PLC. In such embodiments, it can be desirable that the width of LC waveguide **304** be larger (*e.g.,* 2-3 microns in width) to mitigate loss due to sidewall roughness while still maintaining single-mode behavior.

It should also be noted that, in some embodiments, during the lateral definition of HC waveguide **302** and LC waveguide **304,** an angle is formed in the etch profile of the multi-layer core that results in the width of upper core **410** being smaller than the width of lower core **406.**

Returning now to method **200,** at operation **202,** SI phase shifter **122** is formed in HC waveguide region **114** such that the phase shifter and MZI **306** collectively operate as switching element **102.**

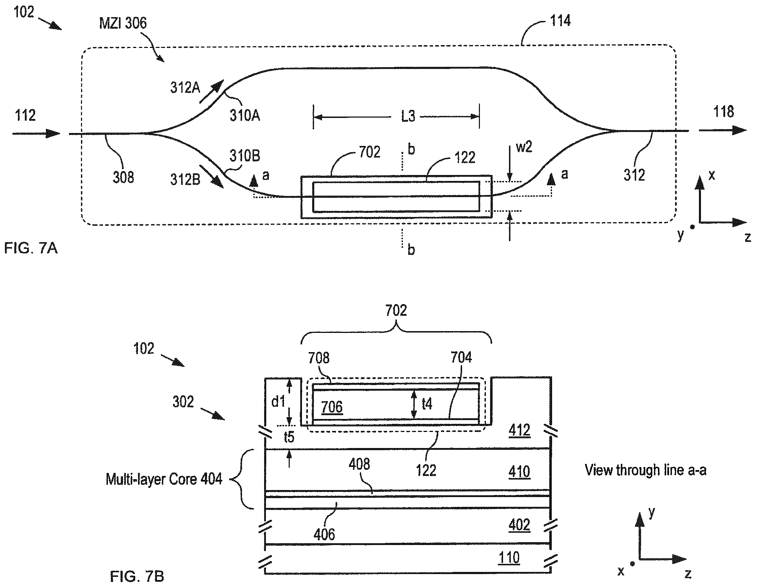

FIG. 7A depicts a schematic drawing of a top view of switching element **102** in accordance with the illustrative embodiment of the present invention. Switching element **102** includes SI phase shifter **122,** which is operatively coupled with HC waveguide **302** in arm **310B** of MZI **306.**

FIG. 7B depicts a schematic drawing of a cross-sectional view of SI phase shifter **122** and arm **310B.** The cross-section shown in FIG. 7B is taken through line a-a of FIG. 7A. SI phase shifter **122** is physically coupled with the waveguide layers of HC waveguide **302** in arm **310B** so that strain generated in the phase shifter gives rise to stress in at least some of the layers of the waveguide. SI phase shifter **122** includes bottom electrode **704,** piezoelectric layer **706,** and top electrode **708.**

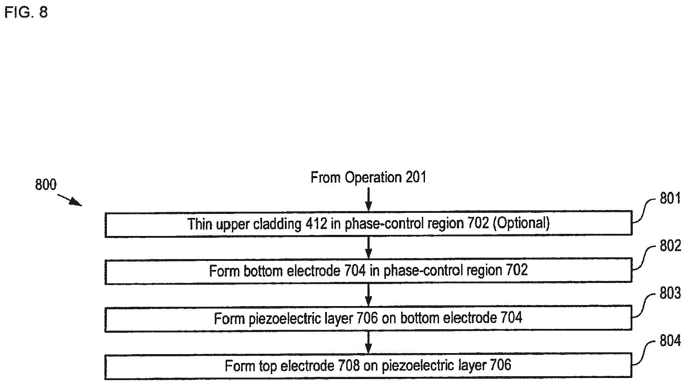

FIG. 8 depicts sub-operations of a method suitable for forming an SI phase shifter in accordance with the illustrative embodiment. Operation **202** begins with optional sub-operation **801,** wherein upper cladding **412** is thinned by etching it to a depth **of dl** in phase-control region **702** such that the upper cladding material under the phase shifter has thickness **t5.**

It is an aspect of the present invention that thinning upper cladding **412** in the region under SI phase shifter **122** enhances the mechanical coupling between piezoelectric layer **706** and the waveguide layers of arm **310B.** This facilitates the efficient conversion of strain induced in piezoelectric material into stress in the underlying waveguide layers.

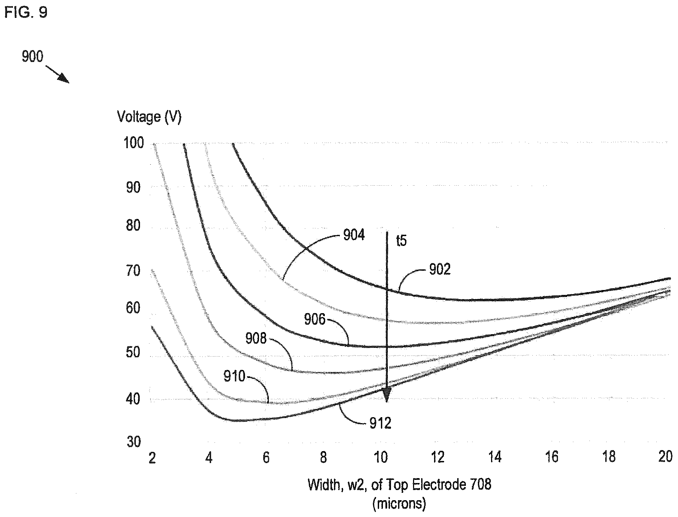

FIG. 9 depicts simulation results showing the voltage required to induce a 2π phase change in HC waveguide **302** versus upper-electrode width, **w2**, for different thicknesses, **t5,** of upper-cladding layer under phase shifter **122.** Plot **900** shows the effectiveness of stress tuning in an HC waveguide **302** by an SI phase shifter in accordance with the present invention as the dimensions of the phase shifter are varied - specifically, the width of top electrode **708** and the thickness, **t5,** of upper cladding layer **412** under the SI phase shifter. The SI phase shifter is disposed on a dual-stripe waveguide having a width of 1.1 microns, where lower and upper cores have thicknesses of 65 nm and 175 nm, respectively.

Traces **902** through **912** correspond to structures having thicknesses **t5** of 8, 7, 6, 5, 4, and 3.5 microns, respectively. Collectively, traces **902-912** clearly show the benefit of thinning upper cladding layer **412** under the SI phase shifter. The voltage required to induce a 2π phase shift for a cladding thickness, **t5,** of 3.5 microns is nearly half that required for an unthinned upper cladding layer (*i.e*., trace **902,** where **t5** is 8.0 microns). It should also be noted that the required width of top electrode **908** is reduced for thinner upper cladding layers as well.

At sub-operation **802,** bottom electrode **704** is formed in phase-control region **702** such that it is in good physical contact with upper cladding **412.** Bottom electrode **704** is a layer of electrically conductive material having a thickness of approximately 0.1 micron.

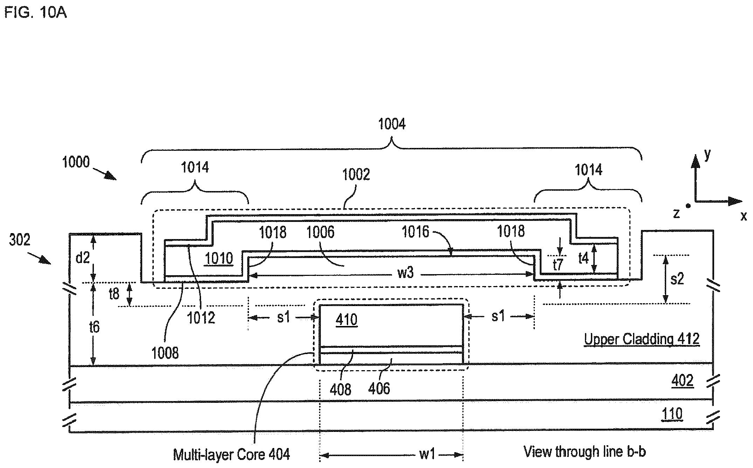

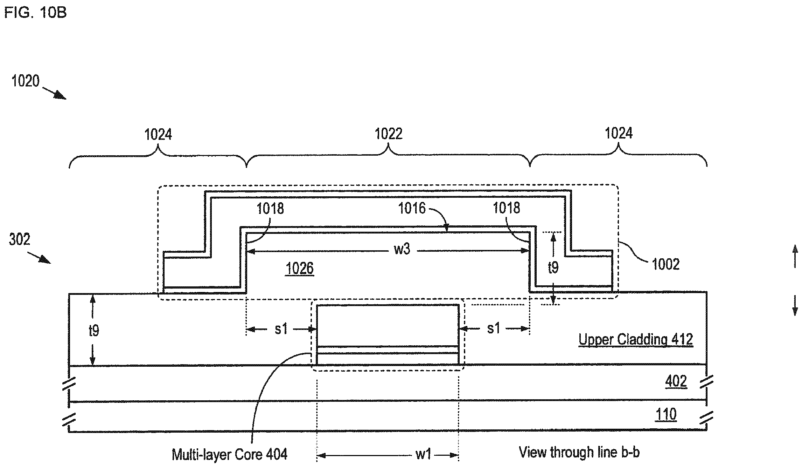

At sub-operation **803,** piezoelectric layer **706** is formed on bottom electrode **704.** Piezoelectric layer **706** is a layer of piezoelectric material having exemplary dimensions that include a thickness, **t4,** of approximately 2 microns, length, **L3,** of approximately 4.6 mm, and width, **w2,** of approximately 35 microns. It should be noted that piezoelectric layer **706** can have any suitable dimensions without departing from the scope of the present invention. Further, as discussed below and with respect to FIG. 10, the dimensions selected for piezoelectric layer **706** have significant impact on the effectiveness with which SI phase sifter **122** operates. Materials suitable for use in piezoelectric layer **706** include, without limitation lead-zirconate titanate (PZT), aluminum nitrate, quartz, polyvinylidene fluoride, and the like.

At sub-operation **804,** top electrode **708** is formed on piezoelectric layer **706.** Top electrode **708** is a layer of electrically conductive material having a thickness of approximately 0.1 micron. Materials suitable for use in each of bottom electrode **704** and top electrode **708** include, without limitation, metals (e.g., platinum, gold, tungsten, titanium-tungsten, *etc.*), silicides, semiconductors, conductive polymers, and the like. Furthermore, at least one of bottom electrode **704** and top electrode **708** can have a thickness other than 0.1 micron without departing from the scope of the present invention.

It should be noted that the length and width of piezoelectric layer, relative to the dimensions of HC waveguide **302,** can significantly impact the effectiveness of SI phase shifter **122.**

FIG. 10A depicts a schematic drawing of a cross-sectional view of a switching element in accordance with an alternative embodiment of the present invention. The cross-section shown in FIG. 10 is taken through line b-b of FIG. 7A. Switching element **1000** includes SI phase shifter **1002,** which is physically coupled with the waveguide layers of HC waveguide **302** in arm **310B** so that strain generated in the phase shifter gives rise to stress in at least some of the layers of the waveguide. SI phase shifter **1002** includes bottom electrode **1008,** piezoelectric layer **1010,** and top electrode **1012,** and is formed in phase-control region **1004.Phase** control region **1004** is analogous to phase control region **702**; however, phase control region **1004** includes projection **1006** and field regions **1014,** which collectively define the topography of phase control region **1004.** Projection **1006** includes top surface **1016** and sides **1018.** The topography within phase control region **1004** facilitates the development of an enhanced stress configuration in the waveguide structure. Specifically, the topography of phase control region **1004** gives rise to a stress effect that arises at the edges of projection **1006.**

Bottom electrode **1008,** piezoelectric layer **1010,** and top electrode **1012** are analogous to bottom electrode **704,** piezoelectric layer **706,** and top electrode **708,** as described above and with respect to FIG. 7B. In the alternative embodiment, however, each of bottom electrode **1008,** piezoelectric layer **1010,** and top electrode **1012** has a shape that substantially conforms to the topography of phase control region **1004.** As a result, each of these layers is disposed on each of top surface **1016** and sides **1018** of projection **1006.** As the piezoelectric effect occurs in piezoelectric layer **1010,** therefore, it gives rise to stress tensors that are laterally directed. This laterally directed stress can enhance the effect on the refractive indices of the layers of HC waveguide **302.**

Exemplary dimensions for phase control region **1004** include a depth, **d2,** of approximately 5 microns, which results in a field thickness, **t6,** of approximately 3 microns for upper cladding **412** in field regions **1014,** giving the thickness, **t8,** of upper cladding **412** between multi-layer core **404** and projection **1006** as approximately 2.5 microns. Projection **1006** projects above the field thickness by height, **t7,** which is approximately 3 microns and has width, **w3,** of approximately 10 microns. As a result, the separation, **s1,** between each edge of waveguide core **404** and the edge of projection **1006** is equal to approximately 4.5 microns (for HC waveguide **302** having width, **w1**, of 1 micron as discussed above and with respect to FIG. 4), and the separation, **s2,** between waveguide **302** and top surface **1016** is approximately 3 microns.

Generally, the dimensions of a phase control region in accordance with the present invention are based on the dimensions of the core layers of HC waveguide **300.** In other words, the dimensions of phase control regions **702** and **1004** are typically designed relative to the width and thickness of each of lower core **406,** central core **408,** and upper core **410.** Further, the separations, **s1** and **s2,** between the structure of multi-layer core **302** and the features of projection **1006** (and, as a result, the topography of SI phase shifter **1002**) are based on the wavelength of light signal **112.** Typically, the values of **s1** and **s2** scale with wavelength (*i.e*., **s1** and **s2** are smaller for shorter wavelengths). Although the topography of phase control region **1004** can have any suitable dimensions without departing from the scope of the present invention, for a waveguide having core layers of widths within the range of 0.5 microns to 3 microns, the width, **w3,** of projection **1006** is typically within the range of approximately 0.5 microns to approximately 20 microns, field thickness, **t6,** is typically within the range of approximately 2 microns to 3 microns, and the height, **t7,** of projection **1006** is typically within the range of approximately 0.5 microns to approximately 6 microns. As a result, separation distances **s1** and **s2** are typically within the range of a few microns to approximately 10 microns.

It is an aspect of the present invention that the ratio of the width, **w3,** of projection **1006** to the thickness, **t8,** of upper cladding layer **1006** between core **404** and the projection can be controlled to control the distribution of lateral stress and vertical stress induced in the waveguide layers of HC waveguide **302.** As a result, by controlling this ratio, the present invention enables a measure of control over the modal birefringence of the HC waveguide. This ratio is typically within the range of approximately 2.5:1 to approximately 6:1.

In a similar fashion, it is another aspect of the present invention that the ratio width, **w3,** of projection **1006** to the width, **w1**, of HC waveguide **302** can be controlled to affect the modal birefringence of the waveguide. The ratio of projection width, **w3,** to core width, **w1**, is typically within the range of 1:1 to 15:1.

In some embodiments, phase control region **1004** is formed by depositing the material of upper cladding **412** in conformal fashion, such that projection **1006** projects above the upper cladding in the field regions outside the region of multi-layer core **404** (*i.e*., field regions **1024**).

FIG. 10B depicts a schematic drawing of a cross-sectional view of a switching element in accordance with the alternative embodiment of the present invention, where phase control region is formed via conformal deposition of top-cladding-layer material over a multi-layer core. Switching element **1024** includes SI phase shifter **1002,** as described above.

During fabrication of switching element **1024,** projection **1026** is formed by forming upper cladding **412** as a conformal layer over the topography of multi-layer core **404.** As a result, phase control region **1022** has width **w3** that is substantially equal to the width of multi-layer core **404** plus the thickness, **t9,** of upper cladding layer **412.** In other words, the magnitude of **s1** is approximately equal to that of **t9** and multi-layer core **404** is surrounded by a substantially uniform thickness layer of upper cladding material. As discussed above, the topography of phase control region **1022** gives rise to a stress effect that arises at the edges of projection **1026.**

Generally, the value of **t9** is within the range of approximately 2 microns to approximately 15 microns. Typically, however, **t9** is within the range of approximately 2 microns to 7 microns, and is preferably within the range of approximately 3 microns to 4 microns. As a result, the ratio of **w3** to **w1** is within the range of approximately 5:1 to approximately 30:1 and typically within the range of approximately 5:1 to approximately 15:1. Preferably, however, the ratio of **w3** to **w1** is within the range of approximately 7:1 to approximately 9:1.

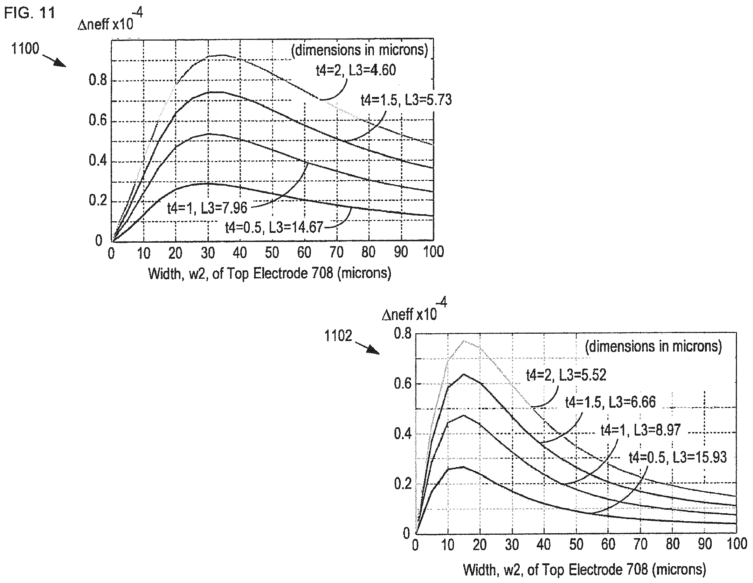

Returning now to the illustrative embodiment, FIG. 11 depicts simulation results for the effective refractive index of HC waveguide **302** versus upper-electrode width, **w2,** for different lengths and thicknesses of piezoelectric layer **706.** Plot **1100** shows the effect of changes in the dimensions of piezoelectric layer **706** on the effectiveness with which SI phase shifter **122** changes the effective refractive index of waveguide **302** for TM polarized light at a constant applied electric field. Plot **1102** shows the effect of changes in the dimensions of piezoelectric layer **706** on the effectiveness of SI phase shifter **122** changes the effective refractive index of waveguide **302** for TE polarized light at a constant applied electric field.

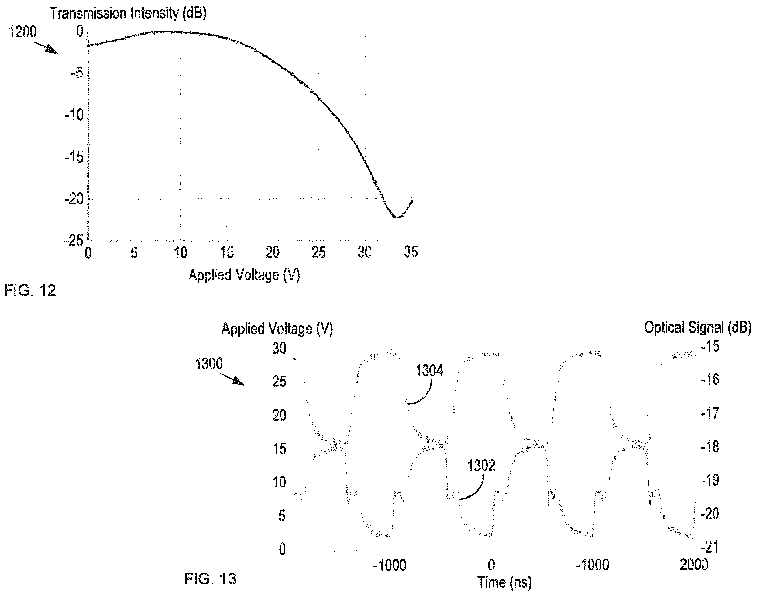

FIG. 12 depicts a plot of measured modulation depth induced in HC waveguide **302** by phase shifter **122.** Plot **1200** shows the transmission intensity of output signal **118** versus applied voltage over the range from 0 V to 35 V.

Plot **1200** shows that π phase modulation can be attained at a reasonable applied voltage, which corresponds to a power consumption of approximately 3 microWatts. For comparison, it is noted that a prior-art TO phase shifter would require approximately 500 milliWatts (*i.e*., more than one hundred thousand times the power) to achieve 2π phase modulation.

FIG. 13 depicts a plot of measured switching speed in HC waveguide **302** by phase shifter **122.** Plot **1300** includes trace **1302** and **1304.** Trace **1302** shows the applied drive signal, while trace **1304** corresponds to output signal **118.**

Plot **1300** demonstrates a switching speed of approximately 150 ns obtained with the SI phase shifter. It is believed that faster switching speeds are attainable with different configurations in accordance with the present invention. By comparison, a prior art TO phase shifter would require approximately 100 microseconds to switch output signal **118** (approximately six orders of magnitude slower).

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A planar-lightwave circuit (PLC) comprising:
a first waveguide having:
a core that supports the propagation of an optical mode of a first light signal, the optical mode including a first TE-polarization mode and a first TM-polarization mode, the core including a plurality of layers that collectively support the propagation of the optical mode, the plurality of layers comprising a first silicon nitride layer, a second silicon nitride layer, and a silicon dioxide layer that is between the first silicon nitride layer and second silicon nitride layer; and
a top cladding disposed on the core;
a first layer comprising a piezoelectric material, the first layer being disposed on the first waveguide in at least a portion of a first region;
wherein the first layer is dimensioned and arranged to induce a first stress-induced phase shift in the first TE-polarization mode and a second stress-induced phase shift in the first TM-polarization mode in response to a first electric signal applied to the first layer.

2. The PLC of claim 1 further comprising a projection in the first region, the projection being a portion of the top cladding and having a top surface, a first side, and a second side; wherein the first layer is disposed on the top surface and each of the first and second sides.

3. The PLC of claim 2 wherein the projection is **characterized by** a first ratio of width to height, and wherein a second ratio of the first phase shift to the second phase shift is based on the first ratio.

4. The PLC of claim 2 wherein a first ratio of the first phase shift to the second phase shift is based on a second ratio of a first width of the projection and a second width of the core.

5. The PLC of claim 1 wherein the first layer is **characterized by** a first ratio of thickness to length, and wherein a second ratio of the first phase shift to the second phase shift is based on the first ratio.

6. The PLC of claim 1 further comprising:
a second waveguide, the second waveguide being operative for supporting propagation of a second light signal that includes a second TE-polarization mode and
a second TM-polarization mode;
a third waveguide; and
a coupler operative for (1) combining the first light signal and second light signal into a third light signal having a third TE-polarization mode and a third TM-polarization mode and (2) coupling the third light signal into the third waveguide;
wherein the magnitude of each of the third TE-polarization mode and third TM-polarization mode is based on the magnitude of the first electrical signal.

7. A planar-lightwave circuit (PLC) comprising:
a first waveguide having a core and a top cladding disposed on the core, wherein the first waveguide has a first region in which the core includes a plurality of layers that collectively support the propagation of a first light signal having a first optical mode that includes a first TE-polarization mode and a first TM-polarization mode, the plurality of layers including a first silicon nitride layer, a second silicon nitride layer, and a silicon dioxide layer that is between the first and second silicon nitride layers; and
a stress-inducing (SI) phase shifter that is operatively coupled with the first waveguide in the first region;
wherein the SI phase shifter is dimensioned and arranged to induce a stress in at least one layer of the plurality thereof to control a first phase shift in the first TE-polarization mode and a second phase shift in the first TM-polarization mode.

8. The PLC of claim 7 wherein the first waveguide includes a projection in the first region, the projection including a top surface, a first side, and a second side, and wherein the SI phase shifter includes a first layer of piezoelectric material that is disposed on each of the top surface, the first side, and the second side.

9. The PLC of claim 7 further comprising:
a second waveguide;
a third waveguide; and
a coupler that is operative for combining the first light signal and a second light signal propagating in the second waveguide into a third light signal and optically coupling the third light signal into the third waveguide;
wherein the second light signal has a second optical mode that includes a second TE-polarization mode and a second TM-polarization mode; and
wherein the third light signal has a third optical mode that includes a third TE-polarization mode whose magnitude is based on the stress and a third TM-polarization mode whose magnitude is based on the stress.

10. The PLC of claim 7 wherein the first waveguide includes a second region in which the first silicon nitride layer has a thickness that changes from a first thickness to zero, and wherein the first region and second region are optically coupled.

11. The PLC of claim 7 wherein the first waveguide includes a projection in the first region, and wherein the SI phase shifter is disposed on at least a portion of the projection, and further wherein the projection and the core are dimensioned and arranged such that the first and second phase shifts are substantially equal.

12. A method for controlling the phase of each of a TE-polarization mode and a TM-polarization mode of a light signal propagating through a first waveguide of a planar-lightwave circuit (PLC), the method comprising:
providing the first waveguide such that, in a first region, it includes a core that comprises a plurality of dielectric layers that includes a first silicon nitride layer, a second silicon nitride layer, and a silicon dioxide layer that is between the first and second silicon nitride layers, the plurality of dielectric layers collectively supporting an optical mode of the light signal, the optical mode including the TE-polarization mode and TM-polarization mode;
providing a first layer comprising a piezoelectric material, the first layer being disposed on the first waveguide;
applying a first electric signal to the first layer; and
controlling the magnitude of the first electrical signal;
wherein the application of the first electric signal to the first layer gives rise to a stress in the first waveguide; and
wherein the first layer is dimensioned and arranged such that the stress induces a first stress-induced phase shift in the TE-polarization mode and a second stress-induced phase shift in the TM-polarization mode.

13. The method of claim 12 further comprising controlling the first phase shift and second phase shift such that they are substantially equal.

14. The method of claim 12 further comprising forming the first waveguide such that it includes a second region in which the core comprises the first silicon nitride layer, the second silicon nitride layer, and the silicon dioxide layer, wherein the thickness of the first silicon nitride layer changes monotonically from a first thickness to zero in the second region.

15. The method of claim 12 further comprising providing the waveguide such that it includes an upper cladding layer between the core and the first layer, wherein the core has a width and the upper cladding layer has a thickness, and wherein at least one of the first phase shift and second phase shift is based on a ratio between the width and thickness, and wherein the ratio is within the range of approximately 2.5:1 to approximately 6:1.
